Europäisches Patentamt

European Patent Office

Office européen des brevets

(19)

(11) **EP 0 901 585 B1**

(12) **EUROPÄISCHE PATENTSCHRIFT**

(45) Veröffentlichungstag und Bekanntmachung des Hinweises auf die Patenterteilung:
**08.12.1999 Patentblatt 1999/49**

(21) Anmeldenummer: **97927062.6**

(22) Anmeldetag: **28.05.1997**

(51) Int Cl.⁶: **F16H 61/38**, B60K 41/22

(86) Internationale Anmeldenummer:
**PCT/EP97/02769**

(87) Internationale Veröffentlichungsnummer:
**WO 97/46816 (11.12.1997 Gazette 1997/53)**

(54) **VERFAHREN ZUR STEUERUNG EINES STUFENLOS ARBEITENDEN GETRIEBES (CVT)**

PROCESS FOR CONTROLLING A CONTINOUSLY VARIABLE TRANSMISSION SYSTEM (CVT)

PROCEDE DE REGULATION D'UNE TRANSMISSION A CHANGEMENT DE VITESSES CONTINU

(84) Benannte Vertragsstaaten:
**DE FR GB IT SE**

(30) Priorität: **01.06.1996 DE 19622108**

(43) Veröffentlichungstag der Anmeldung:
**17.03.1999 Patentblatt 1999/11**

(73) Patentinhaber: **ZF-Batavia, L.L.C.
Plymouth, Michigan 48170-2456 (US)**

(72) Erfinder:
• **BACHER, Holger
D-88131 Lindau (DE)**

• **CLAUSEN, Dirk
D-88046 Friedrichshafen (DE)**

(74) Vertreter: **Zietlow, Karl-Peter
ZF FRIEDRICHSHAFEN AG
88038 Friedrichshafen (DE)**

(56) Entgegenhaltungen:
| EP-A- 0 639 732 | DE-A- 4 042 091 |
| DE-A- 4 042 092 | GB-A- 2 239 912 |
| GB-A- 2 263 519 | US-A- 5 435 795 |

**Beschreibung**

Die Erfindung betrifft ein Verfahren zum Steuern eines CVT des Kegelscheibenumschlingungstyps während eines ABS-Betriebs bzw. während einer Blokkierbremsung.

Stufenlose Automatgetriebe des Kegelscheibenumschlingungstyps, nachfolgend CVT genannt (Continuously Variable Transmission), bestehen aus folgenden Baugruppen: Anfahreinheit, Vorwärts-/Rückwärtsfahreinheit, Variator, Zwischenwelle, Differential, hydraulischem und elektronischem Steuergerät. Ein derartiger Aufbau ist z. B. aus der ATZ Automobiltechnische Zeitschrift 96 (1994) 6, Seite 380, bekannt. Bei einem Fahrzeug, welches mit einem CVT ausgestattet ist, treten in der Praxis bei einer Blockierbremsung folgende Probleme auf: der blockierende Abtrieb zieht aufgund des starren Durchtriebs des CVT's die Bremskraftmaschine unter eine Leerlaufdrehzahl, das sogenannte Abwürgen. Als zweite Wirkung kann Bandschlupf aufgrund der hohen Drehzahlgradienten an der Primär- bzw. Sekundärscheibe des Variators auftreten. In diesem Zusammenhang ist aus der DE-OS 40 42 092 bekannt, die Übersetzung eines CVT während der ABS-Funktion auf einen neuen Übersetzungswert zu ändern, wobei der neue Übersetzungswert eine Funktion des ABS-Betriebes darstellt. Aus der DE-OS 40 42 090 wiederum ist ein Verfahren bekannt, nach Ende der ABS-Funktion die aktuelle Übersetzung auf eine Zielübersetzung innerhalb einer zuvor berechneten Zeit zu ändern. Die Zeit entspricht hierbei einer Anhaltezeit von der aktuellen Fahrzeuggeschwindigkeit bis zum Stillstand. Aus der EP-A1 0 639 732 ist bekannt, bei einer Panikbremsung (Emergency Stop) die aktuelle Übersetzung festzuhalten.

Der beschriebene Stand der Technik betrachtet für einen Bremsvorgang lediglich den Variator als aktives System. Der Stand der Technik weist somit den Nachteil auf, daß die Verbindung zwischen Fahrzeugrad und Brennkraftmaschine via CVT während eines Bremsvorgangs nicht berücksichtigt ist.

Die Erfindung hat insofern zur Aufgabe, für einen Bremsvorgang ein Verfahren bereitzustellen, welches das gesamte System Brennkraftmaschine/CVT berücksichtigt.

Die Aufgabe wird erfindungsgemäß dadurch gelöst, daß ein Fahrzustand blockierende Räder gesetzt wird, wenn ein Steuergerät für ein Antiblockiersystem einen aktiven Zustand anzeigt oder der Gradient der Raddrehzahlen größer einem Grenzwert und eine Bremse betätigt ist oder alternativ ein Bremsdruck einen Grenzwert überschreitet und die Fahrzeuggeschwindigkeit größer einem Grenzwert ist. Mit Setzen des Fahrzustandes blockierende Räder wird eine Wandlerüberbrückungskupplung geöffnet, gleichzeitig eine Vorwärtsfahr- oder Rückwärtsfahrkupplung geöffnet und das Druckniveau in der Sekundärscheibe angehoben, wobei die Übersetzung des CVT um einen vorgebbaren Differenzwert geändert wird und wobei die Änderung der Übersetzung mit einem vorgebbaren Gradienten erfolgt. Die Lösung bietet den Vorteil, daß während einer Blockierbremsung die kraftschlüssige Verbindung zwischen Abtrieb und Antrieb aufgetrennt wird. Hierdurch wird eine Verspannung des Antriebsstrang verhindert und über die Erhöhung des Sekundärdruckes gleichzeitig wirksam verhindert, daß Bandschlupf auftritt.

In einer Ausgestaltung hierzu wird vorgeschlagen, daß der Fahrzustand blockierende Räder zurückgesetzt wird, wenn in einer ersten Abfrage positiv erkannt wird, daß die Bremse nicht betätigt ist oder alternativ der Bremsdruck unterhalb eines Grenzwertes liegt und die Raddrehzahlen bzw. die Fahrzeuggeschwindigkeit kleiner einem Grenzwert sind. In einer zweiten Abfrage muß positiv erkannt werden, daß eine Vorwärts- oder Rückwärtsfahrposition eingelegt und ein Drosselklappensignal größer einem Grenzwert ist.

In einer Ausgestaltung hierzu wird vorgeschlagen, daß bei negativem Ergebnis der zweiten Abfrage geprüft wird, ob die Übersetzung größer einem Grenzwert ist. Hierbei stellen Übersetzungswerte oberhalb des Grenzwertes den Bereich des komfortablen Anfahrens und Übersetzungswerte unterhalb des Grenzwertes den Bereich der Stillstandsverstellung dar. Die zweite Abfrage ist z. B. dann negativ, wenn eine Fahrposition eingelegt ist und das Fahrpedal nicht betätigt wurde.

In einer Ausgestaltung hierzu wird vorgeschlagen, daß bei aktivem Fahrzustand Stillstandsverstellung zu einem ersten Zeitpunkt der Sekundärdruck angehoben und der Primärdruck auf Minimaldruck reduziert wird. Zu einem zweiten Zeitpunkt wird die Stillstandsverstellung beendet, wobei der zwischen dem ersten und zweiten Zeitpunkt liegende Zeitraum eine Funktion der Temperatur des Hydraulikmediums und der Übersetzung zum ersten Zeitpunkt darstellt. Alternativ hierzu wird vorgeschlagen, daß die Stillstandsverstellung dann beendet ist, wenn der Sekundärdruck eine signifikante Änderung aufweist. Eine weitere Variante besteht darin, daß die Stillstandsverstellung dann beendet ist, wenn über die axiale Position der Primärscheibe eine Anfahrübersetzung erkannt wird.

In den Zeichnungen ist ein Ausführungsbeispiel dargestellt.

Es zeigen:

Fig. 1        Systemschaubild;

Fig. 2        Programmablauf Fahrzustand blockierende Räder;

Fig. 3        Programmablauf Fahrzustand Stillstandsverstellung, erste Ausführung;

Fig. 4        Programmablauf Fahrzustand Stillstandsverstellung, zweite Ausführung und

Fig. 5        Programmablauf Fahrzustand Stillstandsverstellung, dritte Ausführung.

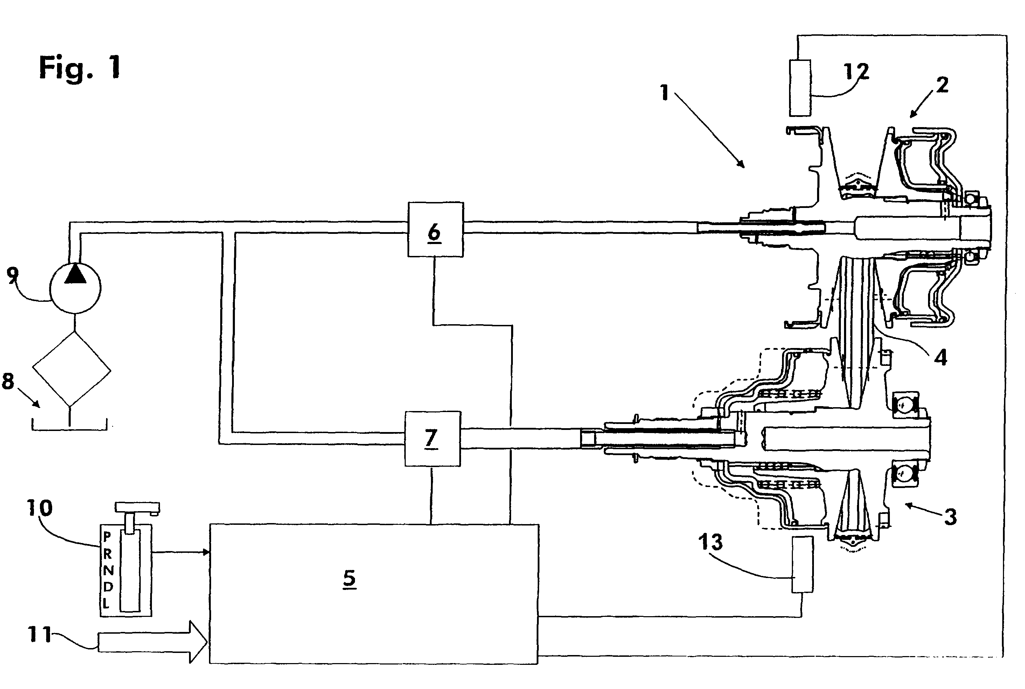

Fig. 1 zeigt ein reduziertes Systemschaubild eines CVT. Das vollständige System ist aus der ATZ Automobiltechnische Zeitschrift 96 (1994) 6, Seite 380, bekannt. Der genannte Artikel zählt mit zur Offenbarung dieser Anmeldung.

Das reduzierte Systemschaubild zeigt mit Bezugszeichen 1 einen Variator. Dieser besteht aus einem antriebsseitig angeordneten Primärkegelscheibenpaar 2, einem Umschlingungsorgan 4 und einem abtriebsseitig angeordneten Sekundärkegelscheibenpaar 3. Jedes Kegelscheibenpaar besteht aus einer in axialer Richtung feststehenden und einer in axialer Richtung beweglichen Kegelscheibe. Über die axiale Position der beweglichen Kegelscheibe wird der Lauf radius des Umschlingungsorgans, somit also die Übersetzung, bestimmt.

Eine elektronische Getriebesteuerung 5 erhält das Signal von einem Wählhebel 10, ein Drehzahlsignal der Primärscheibe 12, ein Drehzahlsignal der Sekundärscheibe 13 und Eingangsgrößen 11. Eingangsgrößen 11 sind z. B. die Raddrehzahlen von einem nicht dargestellten ABS-Steuergerät, ein Aktiv-/Nichtaktiv-Zustandssignal des ABS-Steuergerätes, das Signal einer Drosselklappe und die Temperatur des Hydraulikmediums. Aus diesen Eingangsgrößen bestimmt das elektronische Getriebesteuergerät 5 die Funktionsparameter des CVT, z. B. die Übersetzung, den Betriebspunkt und das Druckniveau in der Primär- und Sekundärscheibe. Das elektronische Getriebesteuergerät 5 bestimmt mittels des elektromagnetischen Druckreglers 6 das Druckniveau im Verstellraum des Primärkegelscheibenpaares 2 und über den Druckregler 7 das Druckniveau im Verstellraum des Sekundärkegelscheibenpaares 3. Hierbei bestimmt das Druckniveau der Primärscheibe die Eingangsdrehzahl des CVT, z. B. die Drehzahl der Brennkraftmaschine. Das Druckniveau der Sekundärscheibe bestimmt die Anpressung Umschlingungsorgan 4/Sekundärscheibenpaar 3, somit die Momentenübertragungsfähigkeit des Systems. Die Druckzuführung zu den beiden Druckreglern 6 und 7 erfolgt durch eine Pumpe 9, die das Hydraulikmedium aus einem Schmiermittelsumpf 8 über einen Filter, ohne Bezugszeichen, fördert.

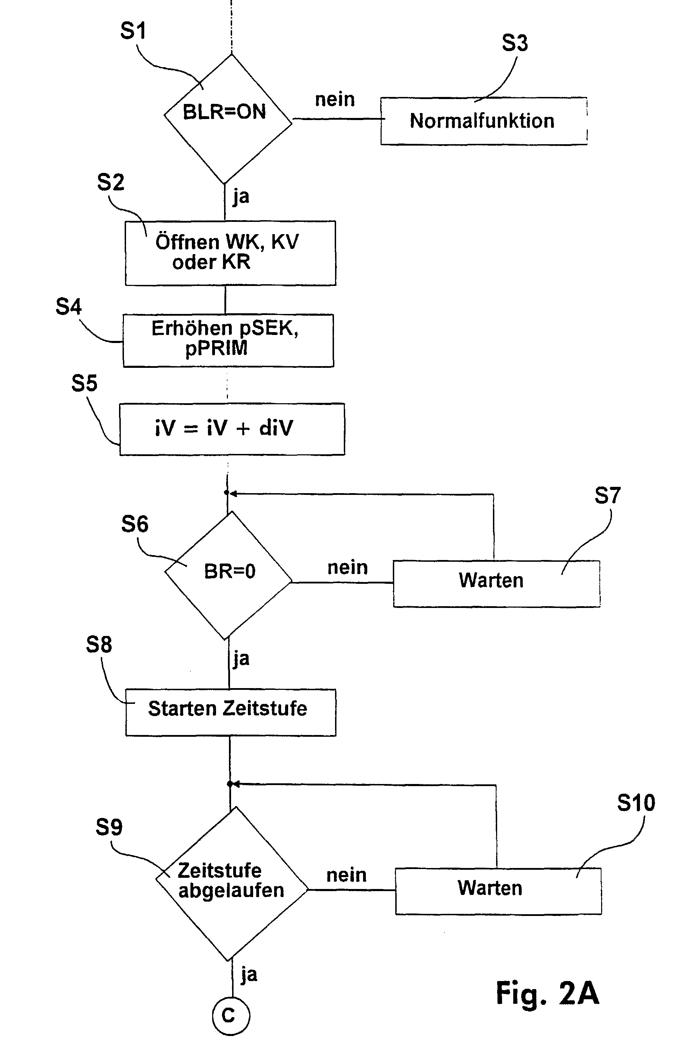

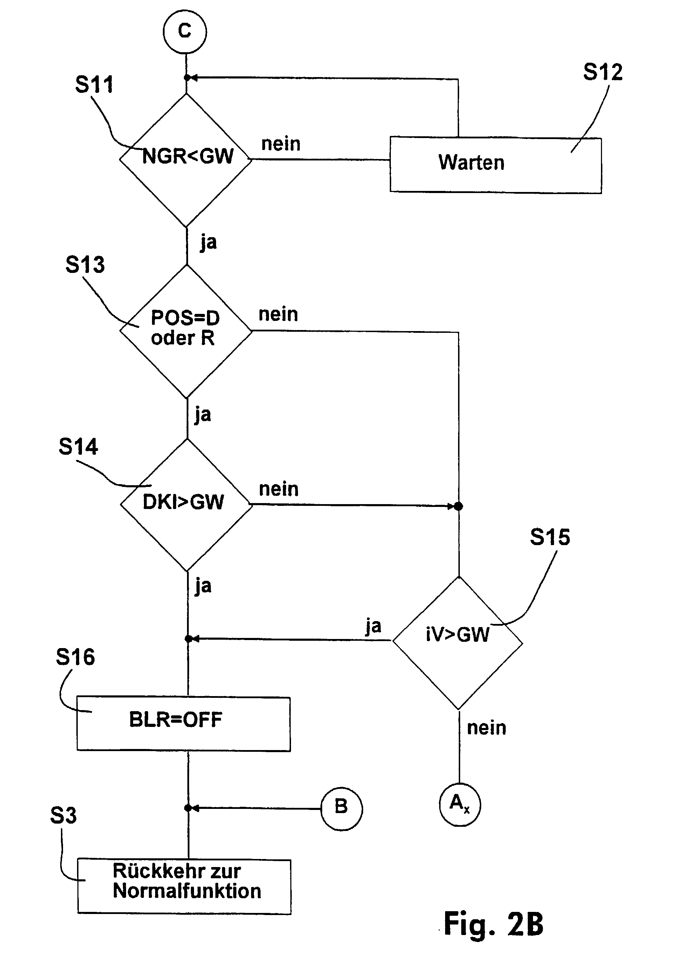

Fig. 2 zeigt einen Programmablauf für den Fahrzustand blockierende Räder. Mit Schritt S1 wird geprüft, ob der Fahrzustand blockierende Räder gesetzt ist (BLR = ON). Der Fahrzustand wird dann gesetzt, wenn ein Steuergerät für ein Antiblockiersystem einen aktiven Zustand anzeigt oder der Gradient der Raddrehzahlen größer einem Grenzwert dnRad/dt < GW und eine Bremse, BR = 1, betätigt ist. Die Bremsbetätigung kann zum einen über einen mechanischen Kontakt des Bremslichtschalters oder alternativ über die Höhe des Bremsdruckes erkannt werden, pBR > GW. Eine weitere Voraussetzung zum Setzen dieses Fahrzustandes ist, daß die Fahrzeuggeschwindigkeit größer einem Grenzwert ist, v > GW. Wird im Schritt S1 erkannt, daß der Fahrzustand blockierende Räder gesetzt ist, BLR = ON, so wird in Schritt S2 als Reaktion hierauf eine Wandlerkupplung (WK) und eine Vorwärtsfahrkupplung (KV) bzw. Rückwärtsfahrkupplung (KR) geöffnet. Selbstverständlich ist es auch möglich, lediglich die Wandlerüberbrückungskupplung (WK) zu öffnen. Ist der Fahrzustand blockierende Räder nicht gesetzt, so wird zur Normalfunktion mit Schritt S3 zurückgekehrt. Bei Schritt S4 wird der Primär-(pPRIM) und Sekundärdruck (pSEK) erhöht. Als Folge hiervon ändert sich die Übersetzung iV des CVT's umd einen vorgebbaren Differenzwert diV, Schritt S5. Es gilt iV = iV + diV. Der Gradient der Übersetzungsänderung ist hierbei vorgebbar. Die Übersetzung wird somit während des Fahrzustandes blockierende Räder aktiv verändern, indem das elektronische Getriebesteuergerät 5 mittels der beiden elektromagnetischen Druckregler 6, 7 das Drucknniveau in der Primär- und Sekundärscheibe bestimmt. Bei Schritt S6 wird geprüft, ob die Bremse nicht mehr betätigt ist (BR = 0). Ist die Abfrage negativ, d. h. der Fahrer betätigt immer noch die Bremse, wird mit Schritt S7 eine Warteschleife durchlaufen. Bei positivem Abfrageergebnis, d. h. der Fahrer hat das Bremspedal gelöst, wird mit Schritt S8 eine Zeitstufe gestartet. Beim Schritt S9 wird geprüft, ob die Zeitstufe abgelaufen ist. Wenn nein, wird mit Schritt S10 eine weitere Warteschleife durchlaufen. Wird festgestellt, daß die Zeitstufe abgelaufen ist, so wird bei Abfrageschritt S11 (Fig. 2B) geprüft, ob der Gradient der Raddrehzahlen kleiner einem Grenzwert NGR > GW ist. Wenn nein, wird wiederum mit Schritt S12 eine Warteschleife durchlaufen. Ist der Raddrehzahlgradient NGR kleiner als der Grenzwert, so wird bei Schritt S13 geprüft, ob eine Vorwärts- (D) oder Rückwärtsfahrposition (R) mittels Wählhebel 10 eingelegt ist. Ist dies nicht der Fall, so verzweigt das Programm zu Schritt S15. Bei positivem Abfrageergebnis bei Schritt S13 wird mit Schritt S14 geprüft, ob das Drosselklappensignal größer einem Grenzwert ist, DKI > GW, d. h., ob der Fahrer das Fahrpedal betätigt hat. Bei negativem Abfrageergebnis, d. h das Fahrpedal ist nicht oder nahezu nicht betätigt, verzweigt das Programm ebenfalls zu Schritt S15. Bei positivem Abfrageergebnis wird mit Schritt S16 der Fahrzustand blockierende Räder zurückgesetzt (BLR = OFF). Danach folgt der Schritt S3 mit der Rückkehr zur Normalfunktion.

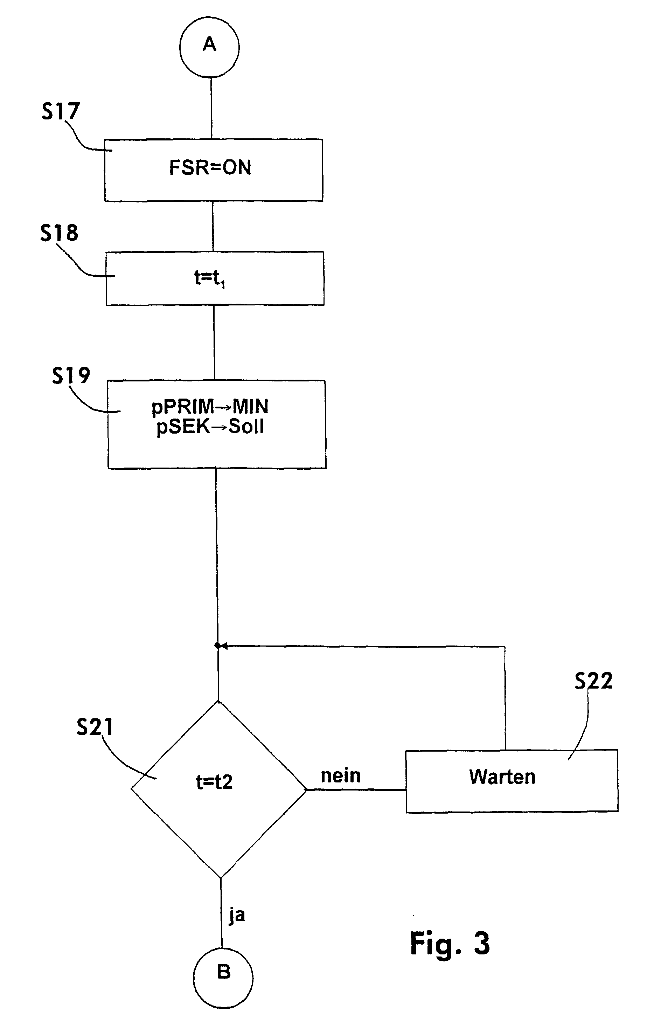

Beim Schritt S15 wird geprüft, ob die letzte Übersetzung iV größer einem Grenzwert ist, iV > GW. Ist dies der Fall, so liegt eine Übersetzung vor, mit der ein komfortables, sicheres Anfahren möglich ist, d. h., als nächster Schritt folgt der Schritt S16 mit dem Zurücksetzen des Fahrzustandes blockierende Räder (BLR = OFF). Wenn die Übersetzung iV kleiner einem Grenzwert ist, also Richtung Overdrive, so verzweigt das Programm zum Unterprogramm A. Im Unterprogramm A wird der Fahrzustand Stillstandsverstellung ausgeführt. Das Unterprogramm wird in Verbindung mit den Fig. 3 bis 5 erklärt.

Fig. 3 zeigt als Unterprogramm eine erste Variante des Fahrzustandes Stillstandsverstellung. Es beginnt mit dem Schritt S17, indem der Fahrzustand Stillstandsverstellung gesetzt wird (FSR = ON). Der Fahrzustand Stillstandsverstellung wird gesetzt, wenn die Übersetzung des CVT unterhalb eines Grenzwertes, also Richtung Overdrive, liegt. Das Unterprogramm ist somit immer dann aktiv, wenn die zuletzt festgehaltene Übersetzung iV nicht zum komfortablen Anfahren ausreicht. Bei Schritt S18 wird eine Zeitstufe gestartet. Bei Schritt S19 wird der Primärdruck pPRIM auf Minimaldruck reduziert und der Sekundärdruck pSEK auf einen Sollwert erhöht. Dadurch wird die Übersetzung in Richtung Anfahrübersetzung iV(A) verändert. Bei Schritt S21 wird geprüft, ob die Zeitstufe abgelaufen ist. Ist dies nicht der Fall, so wird eine Warteschleife S22 durchlaufen. Das Unterprogramm gemäß Fig. 3 geht somit davon aus, daß eine Anfahrübersetzung

iV(A) nach Ablauf einer Zeitstufe erreicht ist. Diese Zeitstufe, d. h. der Zeitraum von t1 bis t2, ist hierbei eine Funktion der Temperatur des Hydraulikmediums (Teta) und der zuletzt eingestellten Übersetzung, t1/t2 = f(Teta, iV). Nachdem die Zeitstufe abgelaufen ist, verzweigt das Programm zum Punkt B, d. h., das Programm verzweigt zum Programmablauf gemäß Fig. 2.

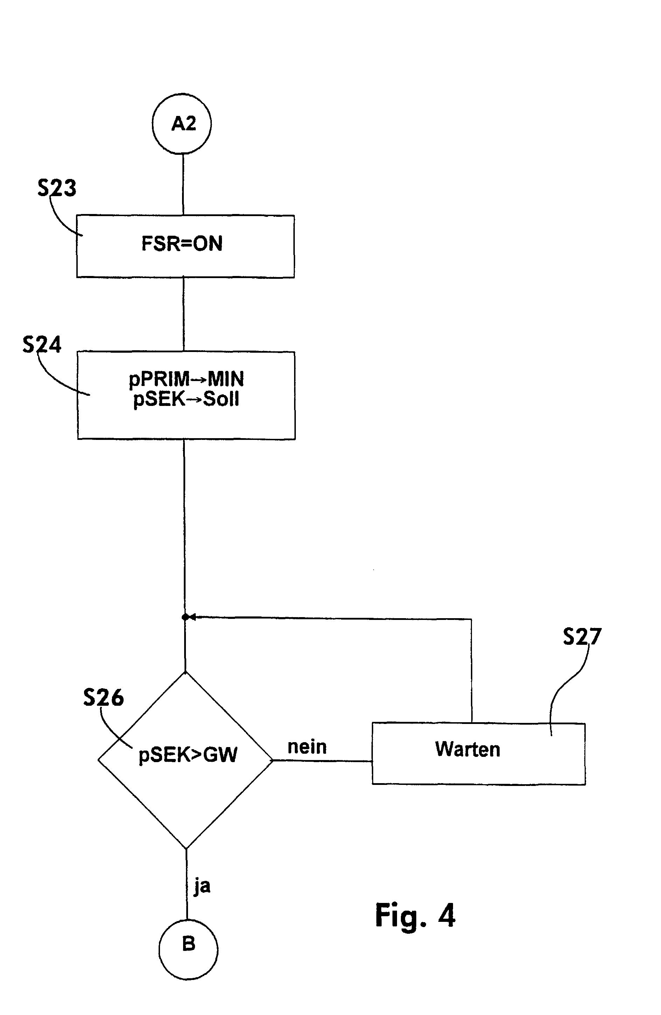

Fig. 4 zeigt eine zweite Variante des Fahrzustandes Stillstandsverstellung. Diese beginnt mit dem Schritt S23, indem der Fahrzustand Stillstandsverstellung gesetzt wird (FSR = ON). Die Eingangsvoraussetzungen sind dieselben, wie in Fig. 3 erklärt. Bei Schritt S24 wird ebenfalls der Primärdruck pPRIM auf ein Minimum reduziert und der Sekundärdruck pSEK auf einen Sollwert erhöht. Dadurch wird die Übersetzung auf die Anfahrübersetzung iV(A) geführt. Bei Schritt S26 wird geprüft, ob der Sekundärdruck eine signifikante Änderung aufweist, d. h., ob der Sekundärdruck größer einem Grenzwert ist, pSEK > GW. Ist dies nicht der Fall, so wird mit Schritt S27 eine Warteschleife durchlaufen. Bei positiver Abfrage, d. h. der Sekundärdruck weist eine signifikante Änderung auf, verzweigt das Programm zum Programmpunkt B, d. h. Rückkehr zum Programmablauf gemäß Fig. 2.

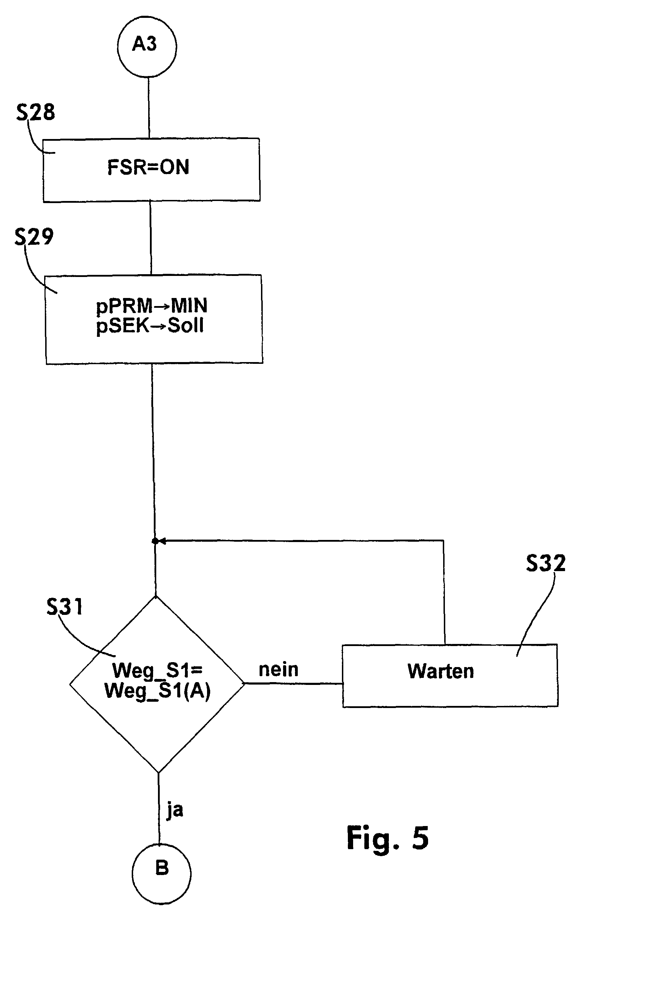

Fig. 5 zeigt eine dritte Variante des Fahrzustandes Stillstandsverstellung. Die Schritte S28 und S29 entsprechen hierbei den Schritten S23 und S24 aus Fig. 4. Beim Schritt S31 wird geprüft, ob die axiale Position der Primäscheibe S1 der Position einer Anfahrübersetzung iV(A) entspricht, Weg_S1(A). Ist dies nicht der Fall, so wird im Schritt S32 eine Warteschleife durchlaufen. Bei positiver Abfrage, d. h., die Übersetzung entspricht der Übersetzung zum Anfahren, verzweigt das Programm zum Punkt B aus Fig. 2.

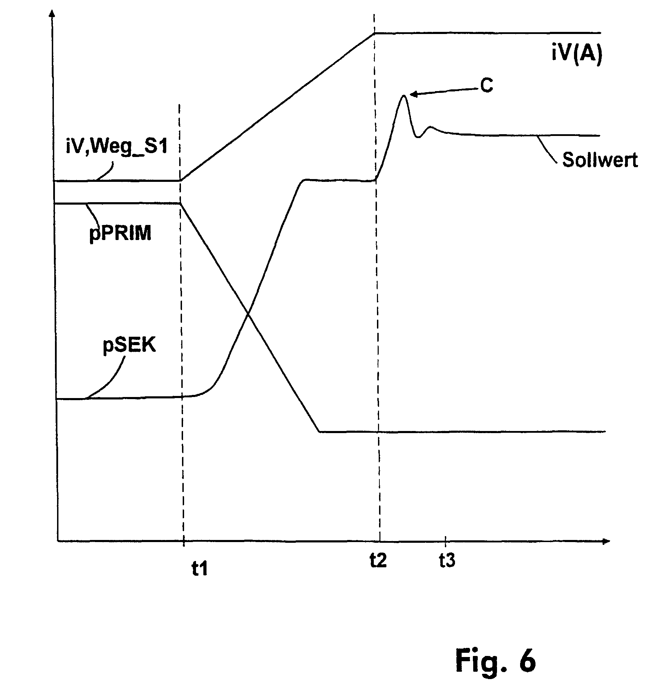

Fig. 6 zeigt über der Zeit den Druckverlauf der Sekundärscheibe pSEK und den Druckverlauf der Primärscheibe pPRIM und die Übersetzung iV bzw. den Weg der Primäscheibe Weg_S1 während des Fahrzustandes Stillstandsverstellung. Mit Setzen des Fahrzustandes Stillstandsverstellung zu einem ersten Zeitpunkt t1 wird der Sekundärdruck auf einen Sollwert angehoben. Gleichzeitig wird der Primärdruck auf Minialdruck reduziert. Zu einem zweiten Zeitpunkt t2 ist die Stillstandsverstellung beendet. Der Zeitraum t1/t2 ist hierbei eine Funktion der Temperatur des Hydraulikmediums und der Übersetzung iV zum Zeitpunkt t1. Eine zweite Variante besteht nun darin, daß der Fahrzustand Stillstandsverstellung dann beendet ist, wenn eine signifikante Änderung des Sekundärdruckes pSEK auftritt. Diese signifikante Änderung ist in Fig. 6 als eine Druckspitze mit dem Bezugszeichen C dargestellt.
Eine dritte Variante für das Ende des Fahrzustandes Stillstandsverstellung besteht nun darin, daß über die axiale Position der Primärscheibe die Anfahrübersetzung iV(A) erkannt wird, Weg_S1(A). Dies läßt sich üblicherweise dadurch realisieren, daß auf dem Zylinder der Primärscheibe geneigte Spuren angeordnet sind, so daß der Drehzahlsensor aus dem zeitlichen Versatz der Impulse gegenüber einer Bezugsmarke die axiale Position der Primärscheibe feststellt. In Fig. 6 hat die Primärscheibe S1 zum Zeitpunkt t2 den Weg Weg_S1(A) erreicht.

<u>Bezugszeichen</u>

| 1 | Variator |
| 2 | Primärkegelscheibenpaar |
| 3 | Sekundärkegelscheibenpaar |
| 4 | Umschlingungsorgan |
| 5 | elektrische Getriebesteuerung |
| 6 | elektromagnetischer Druckregler |
| 7 | elektromagnetischer Druckregler |
| 8 | Schmiermittelsumpf |
| 9 | Pumpe |
| 10 | Wählhebel |
| 11 | Eingangsgrößen |
| 12 | Drehzahl Primärscheibe |
| 13 | Drehzahl Sekundärscheibe |

**Patentansprüche**

1.　Verfahren zum Steuern einer stufenlos arbeitenden Getriebeanordnung mit

- einem Kegelscheibenumschlingungsgetriebe mit druckbetätigter Primär- und Sekundärscheibe,
- Getriebemitteln für Vorwärts- und Rückwärtsfahrt und zugehöriger Vorwärts- und einer Rückwärtsfahrt-Kupplung sowie
- einer Wandlerüberbrückungskupplung und einer Bremse,

**gekennzeichnet** durch folgende Maßnahmen:

- es wird ein Fahrzustand blockierende Räder gesetzt (BLR = ON),

wenn ein Steuergerät eines Antiblockiersystems einen aktiven Zustand anzeigt oder wenn der Gradient der Raddrehzahlen größer als ein Grenzwert und eine Bremse betätigt ist oder wenn ein Bremsdruck einen Grenzwert überschreitet und die Fahrzeuggeschwindigkeit größer als ein Grenzwert ist, wobei

- mit Setzen des Fahrzustandes blockierende Räder (BLR = ON)

die Wandlerüberbrückungskupplung geöffnet und gleichzeitig die Vorwärts- oder die Rückwärtsfahrt-Kupplung geöffnet wird und das Druckniveau in der Sekundärscheibe angehoben und die Übersetzung des Kegelscheibenumschlingungsgetriebes um einen vorgebbaren Differenzwert verändert wird, wobei die Übersetzungsänderung mit einem vorgebbaren Gradienten erfolgt.

2. Verfahren nach Anspruch 1, dadurch **gekennzeichnet**, daß der Fahrzustand blockierende Räder zurückgesetzt wird (BLR = OFF), wenn in einer ersten Abfrage positiv erkannt wird, daß die Bremse nicht betätigt ist oder alternativ der Bremsdruck unterhalb des Grenzwertes liegt, die Raddrehzahlen bzw. die Fahrzeuggeschwindigkeit kleiner einem Grenzwert sind und in einer zweiten Abfrage positiv erkannt wird, daß eine Vorwärts- (D) oder Rückwärtsfahrposition (R) eingelegt ist und ein Drosselklappensignal größer einem Grenzwert ist.

3. Verfahren nach Anspruch 2, dadurch **gekennzeichnet**, daß bei negativen Ergebnis der zweiten Abfrage geprüft wird, ob die Übersetzung (iV) größer einem Grenzwert ist, hierbei Übersetzungswerte oberhalb des Grenzwertes den Bereich des komfortablen Anfahrens darstellen und Übersetzungswerte unterhalb des Grenzwertes den Bereich der Stillstandsverstellung (FSR) darstellen.

4. Verfahren nach Anspruch 3, dadurch **gekennzeichnet**, daß bei aktivem Fahrzustand Stillstandsverstellung (FSR = ON) zu einem ersten Zeitpunkt t1 der Sekundärdruck (pSEK) angehoben und der Primärdruck (pPRIM) auf Minimaldruck reduziert wird, zu einem zweiten Zeitpunkt t2 die Stillstandsverstellung beendet ist (FSR = OFF), wobei der Zeitraum t1/t2 eine Funktion der Temperatur eines Hydraulikmediums und der Übersetzung zum ersten Zeitpunkt darstellt.

5. Verfahren nach Anspruch 3, dadurch **gekennzeichnet**, daß bei aktivem Fahrzustand Stillstandsverstellung (FSR = ON) zu einem ersten Zeitpunkt t1 der Sekundärdruck (pSEK) angehoben und der Primärdruck (pPRIM) auf Minimaldruck reduziert wird, und die Stillstandsverstellung beendet ist (FSR = OFF), wenn der Sekundärdruck (pSEK) eine signifikante Änderung aufweist.

6. Verfahren nach Anspruch 3, dadurch **gekennzeichnet**, daß bei aktivem Fahrzustand Stillstandsverstellung (FSR = ON) zu einem ersten Zeitpunkt t1 der Sekundärdruck (pSEK) angehoben und der Primärdruck (pPRIM) auf Minimaldruck reduziert wird, und die Stillstandsverstellung beendet ist (FSR = OFF), wenn über die axiale Position der Primärscheibe eine Anfahrübersetzung erkannt wird.

7. Verfahren nach einem der vorausgegangenen Ansprüche, dadurch **gekennzeichnet**, daß die Änderung der Übersetzung derart realisiert wird, daß ausgehend vom Druckniveau der Sekundärscheibe (pSEK) das Druckniveau in der Primärscheibe (pPRIM) mittels eines mathematischen Modells berechnet und über einen elektromagnetischen Druckregler eingestellt wird.

8. Verfahren nach Anspruch 7, dadurch **gekennzeichnet**, daß über das mathematische Modell die Nichtlinearitäten und Störgrößen des Variators (1) ausgeglichen werden wobei das Druckniveau der Primärscheibe pPRIM gemäß folgender Beziehung berechnet wird:

$$pPRIM = [C - d(i) \, (di\_soll/dt)]/A1$$

mit

$$C = (pSEK + K\_R2n2^2) \, A2\mu - K\_R1n1^2 \cdot A1$$

hierin bedeuten:

| | |
|---|---|
| pSEK: | Druckniveau der Sekundärscheibe |
| A2: | Wirkfläche der Sekundärscheibe |
| A1: | Wirkfläche der Primärscheibe |
| μ: | Kraftverhältnis Primär- zu Sekundärscheibe (kp/ks) |
| d(i): | übersetzungsabhängiger Parameter |
| di_soll/dt: | Sollwert-Gradient der Übersetzungsänderung |
| n1: | Drehzahl Primärscheibe |
| n2: | Drehzahl Sekundärscheibe |
| K_R1: | rotatorischer Druckbeiwert Primärscheibe |

K_R2: rotatorischer Druckbeiwert Sekundärscheibe

## Claims

1. Process for controlling a continuously-variable transmission arrangement having

   - a conical disc belt transmission with pressure-operated primary disc and secondary disc,
   - transmission means for forward and reverse driving and associated forward and reverse driving clutch, as well as
   - a converter lockup clutch and a brake,

   **characterised by the following steps:**

   - a locked wheels driving condition is set (BLR = ON), if a control unit of an antilock system indicates an active state or

     if the gradient of the wheel speeds is greater than a limit value and a brake is actuated, or if a brake pressure exceeds a limit value and the vehicle speed is greater than a limit value, wherein

   - with the locked wheels driving condition set (BLR = ON)

     the converter lockup clutch is opened and at the same time the forward or reverse driving clutch is opened and the pressure level in the secondary disc is raised and the transmission ratio of the conical disc belt transmission is varied by a specified differential value, wherein the change in transmission ratio is effected with a specified gradient.

2. Process according to Claim 1, **characterised in that** the locked wheels driving condition is reset (BLR = OFF) if in a first interrogation it is positively detected that the brake is not actuated, or alternatively, the brake pressure is below the limit value, the wheel speeds or the vehicle speed, respectively, are less than a limit value and in a second interrogation it is positively detected that a forward (D) or reverse (R) driving position is engaged and a throttle signal is greater than a limit value.

3. Process according to Claim 2, **characterised in that** in the case of a negative result of the second interrogation, the system checks whether the transmission ratio (iV) is greater than a limit value, in which connection transmission ratio values above the limit value represent the range of comfortable starting and transmission ratio values below the limit value represent the stop adjustment range (FSR).

4. Process according to Claim 3, **characterised in that** in the case of an active stop adjustment (FSR = ON) driving condition, the secondary pressure (pSEK) is raised at a first instant t1and the primary pressure (pPRIM) is reduced to minimum pressure, the stop adjustment is ended (FSR = OFF) at a second instant t2, wherein the time interval t1/t2 represents a function of the temperature of a hydraulic medium and the transmission ratio at the first instant.

5. Process according to Claim 3, **characterised in that** in the case of an active stop adjustment (FSR = ON) driving condition, the secondary pressure (pSEK) is raised at a first instant t1 and the primary pressure (pPRIM) is reduced to minimum pressure, and the stop adjustment is ended (FSR = OFF) if the secondary pressure (pSEK) shows a significant change.

6. Process according to Claim 3, **characterised in that** in the event of an active stop adjustment (FSR = ON) driving condition, the secondary pressure (pSEK) is raised at a first instant t1 and the primary pressure (pPRIM) is reduced to minimum pressure, and the stop adjustment is ended (FSR = OFF) if a starting transmission ratio is detected via the axial position of the primary disc.

7. Process according to one of the preceding Claims, **characterised in that** the change in the transmission ratio is effected in such a way that, based on the pressure level of the secondary disc (pSEK), the pressure level in the primary disc (pPRIM) is calculated by means of a mathematical model and is set via an electromagnetic pressure regulator.

8. Process according to Claim 7, **characterised in that** the non-linearities and disturbance variables of the variator (1) are equalized, wherein the pressure level of the primary disc pPRIM is calculated according to the following relationship:

$$pPRIM = [C - d(i) (di\_ref/dt]/A1$$

where

$$C = (pSEK + K\_R2n2^2) A2\mu - K\_R1n1^2 * A1$$

The terms use herein have the following meanings:

pSEK: Pressure level of secondary disc
A2: Working area of secondary disc

A1: Working area of primary disc
$\mu$: Power ratio between primary and secondary disc (kp/ks)
d(i): Transmission ratio-dependent parameter
di_ref/dt: Reference gradient of transmission ratio change
n1: Speed of primary disc
n2: Speed of secondary disc
K_R1: Rotary pressure coefficient of primary disc
K_R2: Rotary pressure coefficient of secondary disc

**Revendications**

1. Procédé pour la régulation d'une transmission à changement de vitesse continu comportant

   - une transmission à enroulement à disques coniques avec disque primaire et disque secondaire activés par pression
   - des moyens de transmission pour marche avant et marche arrière et un embrayage correspondant pour marche avant et marche arrière, ainsi que
   - un convertisseur d'embrayage de prise directe et un frein,

   **caractérisé** par les mesures suivantes :

   - un état de marche bloquant les roues (BLR = ON) est mis en place lorsqu'un appareil de commande d'un système antiblocage affiche un état actif ou

     lorsque le gradient des vitesses de rotation des roues est supérieur à une valeur limite et un frein est actionné, ou
     lorsqu'une pression de frein dépasse une valeur limite et la vitesse du véhicule est supérieure à une valeur limite, dans lequel

   - avec la mise en place de l'état de marche bloquant les roues (BLR = ON)

     le convertisseur d'embrayage de prise directe s'ouvre et,
     simultanément, l'embrayage de marche avant ou de marche arrière s'ouvre et
     le niveau de pression dans le disque secondaire est relevé et le rapport des changements de vitesse de la transmission à enroulement à disques coniques est changé d'une valeur différentielle pouvant être prédéfinie, la variation du rapport s'effectuant avec un gradient pouvant être prédéfinie.

2. Procédé selon la revendication 1, **caractérisé** en ce que l'état de marche bloquant les roues est remis dans sa position initiale (BLR = OFF) quand, lors d'une première interrogation, il est reconnu de façon positive que le frein n'est pas actionné ou, selon une alternative, que la pression du frein se situe en dessous d'une valeur limite, les vitesses de rotation des roues, respectivement la vitesse du véhicule, étant inférieures à une valeur limite et lors d'une deuxième interrogation, il est reconnu de façon positive qu'une position de marche avant (D) ou de marche arrière (R) a été enclenchée et qu'un signal fourni par un clapet à étranglement est supérieur à une valeur limite.

3. Procédé selon la revendication 2, **caractérisé** en ce que, lors d'un résultat négatif de la deuxième interrogation, il est testé si le rapport des vitesses (iV) est supérieur à une valeur limite, les valeurs du rapport des vitesses au-dessus d'une valeur limite représentant la plage du démarrage confortable et les valeurs du rapport de vitesses en dessous d'une valeur limite représentant la plage du réglage du point d'arrêt (FSR).

4. Procédé selon la revendication 3, **caractérisé** en ce qu'avec un état de marche actif de réglage du point d'arrêt (FSR = ON) à un premier instant t1 la pression secondaire (pSEK) est augmentée et la pression primaire (pPRIM) est réduite à une pression minimale, à un deuxième instant t2, le réglage du point d'arrêt est terminé (FSR = OFF), la période de temps t1/t2 représentant une fonction de la température d'un fluide hydraulique et de la transmission au premier instant.

5. Procédé selon la revendication 3, **caractérisé** en ce que, avec un état de marche actif de réglage du point d'arrêt (FSR = ON), la pression secondaire (pSEK) est augmentée à un premier instant t1 et la pression primaire (pPRIM) est réduite à une pression minimale, et le réglage du point d'arrêt est terminé (FSR = OFF) lorsque la pression secondaire (pSEK) présente un changement significatif.

6. Procédé selon la revendication 3, **caractérisé** en ce que, avec un état de marche actif de réglage du point d'arrêt (FSR = ON), la pression secondaire (pSEK) est augmentée à un premier instant t1 et la pression primaire (pPRIM) est réduite à une pression minimale, et le réglage du point d'arrêt est terminé (FSR = OFF) lorsque, par l'intermédiaire de la position axiale du disque primaire, un rapport de démarrage est reconnu.

7. Procédé selon l'une des revendications précédentes, **caractérisé** en ce que le changement du rapport est réalisé de telle façon qu'à partir du niveau de pression du disque secondaire (pSEK), le niveau de pression du disque primaire (pPRIM) est calculé au moyen d'un modèle mathématique et réglé par un régulateur de pression électromagnétique.

8. Procédé selon la revendication 7, **caractérisé** en ce que, par l'intermédiaire du modèle mathématique, les non-linéarités et les grandeurs perturbatrices du variateur (1) sont compensées, le niveau de pression du disque primaire pPRIM étant calculé selon la relation suivante :

$$pPRIM = [C - d(i) \, (di\_soll/dt)]/A1$$

avec

$$C = (pSEK + K\_R2n2^2) \, A2\mu - K\_R1n1^2 \cdot A1$$

où :

| | |
|---|---|
| pSEK | : niveau de pression du disque secondaire |
| A2 | : surface active du disque secondaire |
| A1 | : surface active du disque primaire |
| $\mu$ | : rapport de force disque primaire / disque secondaire (kp/ks) |
| d(i) | : paramètre dépendant du rapport des vitesses |
| di_soll/dt | : gradient de la valeur de consigne du changement de rapport |
| n1 | : vitesse de rotation disque primaire |
| n2 | : vitesse de rotation disque secondaire |
| K_R1 | : coefficient de pression rotatoire disque primaire |
| K_R2 | : coefficient de pression rotatoire disque secondaire |

# Fig. 1

EP 0 901 585 B1

Fig. 2A

Fig. 2B

A

S17
FSR=ON

S18
$t=t_1$

S19
pPRIM→MIN
pSEK→Soll

S21
$t=t2$

nein

S22
Warten

ja

B

**Fig. 3**

Fig. 4

A3

S28

FSR=ON

S29

pPRM→MIN
pSEK→Soll

S32

S31

Weg_S1=
Weg_S1(A)

nein

Warten

ja

B

**Fig. 5**

14

iV(A)

C

Sollwert

iV,Weg_S1

pPRIM

pSEK

t1    t2    t3

**Fig. 6**